# EUROPEAN PATENT SPECIFICATION

(11) **EP 3 587 960 B1**
(45) Date of publication and mention of the grant of the patent: **29.06.2022**
(21) Application number: 19180092.9
(22) Date of filing: 13.06.2019
(51) Int. Cl.: F25B 31/00

(54) **OIL DISTRIBUTING DEVICE AND REFRIGERATION SYSTEM HAVING THE OIL DISTRIBUTING DEVICE**
ÖLVERTEILUNGSVORRICHTUNG UND KÜHLSYSTEM MIT DER ÖLVERTEILUNGSVORRICHTUNG
DISPOSITIF DE DISTRIBUTION D'HUILE ET SYSTÈME DE RÉFRIGÉRATION DOTÉ DU DISPOSITIF DE DISTRIBUTION D'HUILE

(30) Priority: 29.06.2018 CN 201810720666
(43) Date of publication of application: 01.01.2020
(73) Proprietor: Danfoss (Tianjin) Ltd., Tianjin 301700 (CN)
(72) Inventor: Fan, Liang, 6430 Nordborg (DK); Dong, Ying, 6430 Nordborg (DK)
(74) Representative: Keil & Schaafhausen Patentanwälte PartGmbB

(56) References cited:
- EP-A1- 3 219 990
- US-A1- 2014 037 484
- US-B2- 6 983 622

## Description

### TECHNICAL FIELD

Embodiments of the present invention relate to an oil distributing device according to the preamble of claim 1. Such an oil distributing device is known, for example, from US 2014/0037484 A1. Furthermore, embodiments of the present invention relate to a refrigeration system having the oil distributing device.

### BACKGROUND

Generally, a refrigeration system includes compressors connected in parallel. Oil may flow among the compressors depending on an operating condition.

### SUMMARY

An object of embodiments of the present invention is to provide an oil distributing device and a refrigeration system having the oil distributing device, thereby for example achieving a better oil balance control. An oil distributing device according to the present invention is defined in claim 1.

Embodiments of the present invention provide an oil distributing device connected among at least three compressors and configured to distribute oil among the at least three compressors, the oil distributing device comprising: a first joint assembly comprising a plurality of passages fluidly isolated from each other; a plurality of second joint assemblies; and a plurality of connecting pipes respectively connecting the plurality of second joint assemblies to the plurality of passages of the first joint assembly in one-to-one correspondence. The first joint assembly comprises a first tubular member and a second tubular member surrounding the first tubular member, an annular space between the first tubular member and the second tubular member serves as a first one of the plurality of passages of the first joint assembly, and an internal cavity of the first tubular member serves as a second one of the plurality of passages of the first joint assembly.

According to embodiments of the present invention, the annular space is in fluid communication with a first one of the plurality of connecting pipes through a T joint, and the first tubular member is connected directly to a second one of the plurality of connecting pipes.

According to embodiments of the present invention, the first joint assembly comprises a plurality of tubular members, and an internal cavity of each of the plurality of tubular members serves as one of the plurality of passages of the first joint assembly.

According to embodiments of the present invention, the at least three compressors comprise at least one variable-speed compressor and a plurality of fixed-speed compressors, and the first joint assembly is connected to a port of an oil sump of one of the plurality of fixed-speed compressors.

According to embodiments of the present invention, the at least three compressors comprise one variable-speed compressor and two fixed-speed compressors, which are connected in parallel, and the first joint assembly is connected to a port of an oil sump of one of the two fixed-speed compressors.

Embodiments of the present invention provide a refrigeration system comprising: at least three compressors each having an oil sump for storing oil; a suction pipe configured to supply gas and oil to each of the at least three compressors; a discharge pipe configured to discharge the gas and the oil from the at least three compressors; and the above-mentioned oil distributing device, wherein the first joint assembly and the plurality of second joint assemblies are connected to the oil sumps of the at least three compressors in one-to-one correspondence, respectively.

According to embodiments of the present invention, the at least three compressors comprise at least one variable-speed compressor and a plurality of fixed-speed compressors, and the first joint assembly is connected to a port of an oil sump of one of the plurality of fixed-speed compressors.

According to embodiments of the present invention, the at least three compressors comprise one variable-speed compressor and two fixed-speed compressors, which are connected in parallel, and the first joint assembly is connected to a port of an oil sump of one of the two fixed-speed compressors.

According to embodiments of the present invention, the refrigeration system further comprises: an oil level monitor disposed in the variable-speed compressor.

According to embodiments of the present invention, the refrigeration system further comprises: a throttle ring disposed on the suction pipe.

According to embodiments of the present invention, the one variable-speed compressor is disposed to be closer to an inlet of the suction pipe than the two fixed-speed compressors.

For example, the oil distributing device and the refrigeration system according to the embodiments of the present invention can achieve a better oil balance control.

### BRIEF DESCRIPTION OF THE DRAWINGS

FIG. 1 is a schematic view of an oil distributing device according to an embodiment of the present invention;
FIG. 2 is a partially enlarged view of the portion A shown in FIG. 1;
FIG. 3 is a partially enlarged view of the portion B shown in FIG. 1;
FIG. 4 is a partially enlarged view of the portion C shown in FIG. 1;
FIG. 5 is a schematic view of a refrigeration system according to an embodiment of the present invention; and
FIG. 6 is a schematic view of a first joint assembly of an oil distributing device according to another embodiment of the present invention.

### DETAILED DESCRIPTION

A further description of the invention will be made as below with reference to embodiments of the present invention taken in conjunction with the accompanying drawings.

Generally, a refrigeration system includes a plurality of compressors. In the case where the plurality of compressors include a variable-speed compressor (or variable-frequency compressor) and a fixed-speed compressor (or constant-frequency compressor) connected in parallel, it is difficult to balance oil levels of the plurality of compressors simultaneously due to an influence of an operational frequency and a differential pressure of the variable-speed compressor when all the compressors operate simultaneously. After the variable-speed compressor operates at a high frequency for a long time, the fixed-speed compressor even fails (for example, burns down) due to lack of oil. Especially after the fixed-speed compressor stops, a pressure in a chamber of the fixed-speed compressor will increase, so that a portion of suctioned gas returns from the stopping fixed-speed compressor through an oil balancing pipe to the operating variable-speed compressor again. In this case, the bypassing gas will take away lubricating oil in the stopping fixed-speed compressor, so that the stopping fixed-speed compressor lacks oil. When the fixed-speed compressor is started again, it will fail (for example, burn down) due to lack of oil. When the variable-speed compressor operates at a low frequency, the lubricating oil will flow from the variable-speed compressor into the fixed-speed compressor since a pressure in a chamber of the variable-speed compressor is higher than the pressure in the chamber of the fixed-speed compressor. If the variable-speed compressor operates for a long time, it will lack oil and will even fail. Especially in the case where one variable-speed compressor and two fixed-speed compressors are connected in parallel, there is a greater risk of oil unbalance. It is difficult to control oil levels of the three compressors to be kept in a normal state simultaneously.

The oil distributing device according to the embodiments of the present invention can achieve a good oil balance among the compressors while it can effectively avoid an occurrence of excessively low oil level of any one of the compressors.

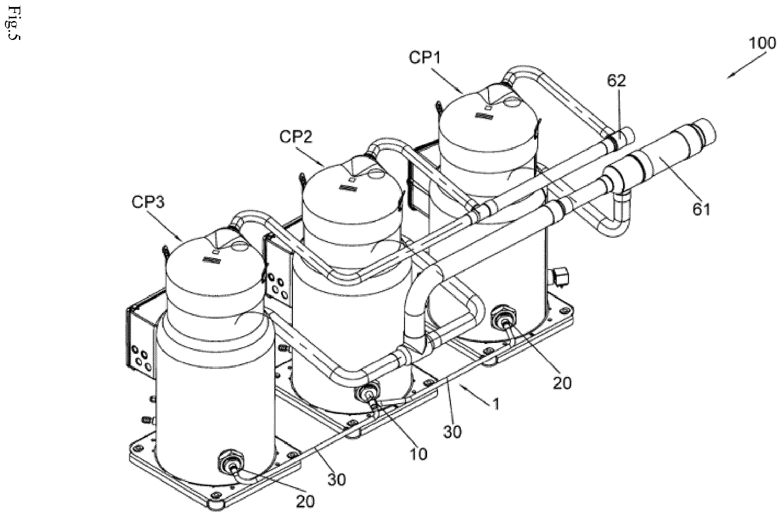

Referring to FIG. 5, a refrigeration system 100 according to embodiment of the present invention includes: at least three compressors CP1, CP2 and CP3 each having an oil sump configured to store oil; and an oil distributing device 1. The oil distributing device 1 is in fluid communication with the oil sump of each of the at least three compressors CP1, CP2 and CP3, and is configured to distribute oil among the at least three compressors CP1, CP2 and CP3, thereby achieving an oil balance among the at least three compressors CP1, CP2 and CP3. The refrigeration system 100 further includes: a suction pipe 61 and a discharge pipe 62. The suction pipe 61 is configured to supply gas and oil to each of the at least three compressors CP1, CP2 and CP3, and the discharge pipe 62 is configured to discharge the gas and the oil from the at least three compressors CP1, CP2 and CP3. A throttle ring may be disposed on the suction pipe 61.

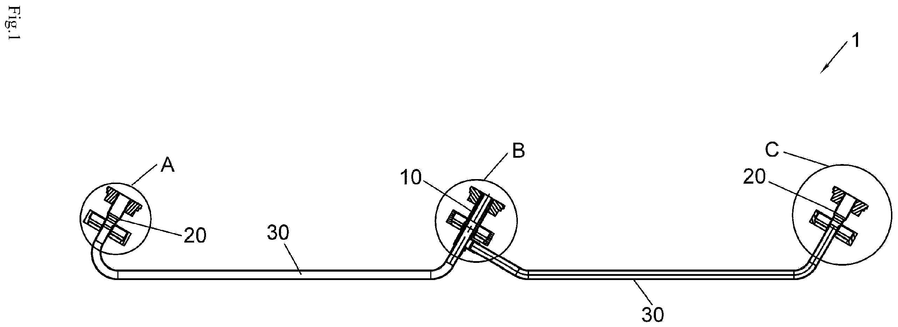

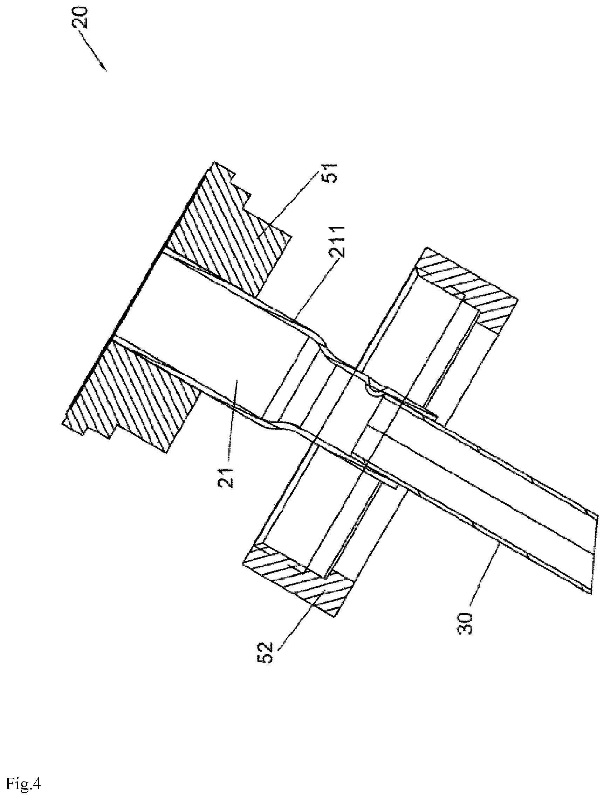

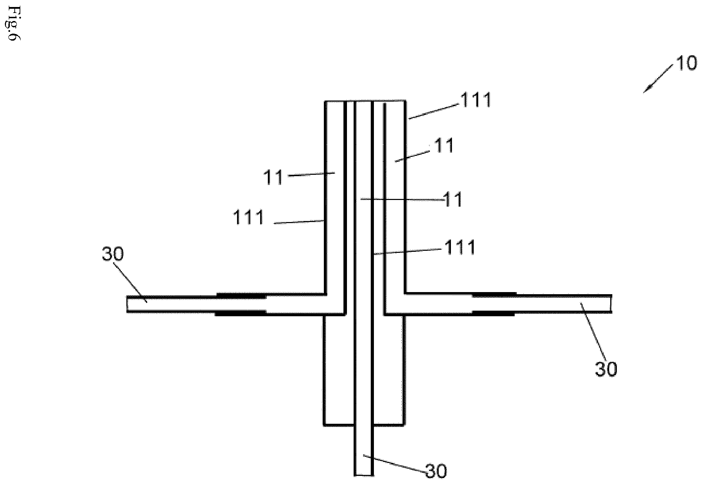

Referring to FIGS. 1-6, the oil distributing device 1 includes: a first joint assembly 10 connected to a port of the oil sump of one compressor CP2 of the at least three compressors; a plurality of second joint assemblies 20 connected to ports of the oil sumps of the other compressors CP1 and CP3 of the at least three compressors; and a plurality of connecting pipes 30. Referring to FIGS. 4 and 6, the first joint assembly 10 includes a plurality of passages 11 which are fluidly isolated from each other and which are in fluid communication with the oil sump of the compressor CP2. Referring to FIGS. 1, 5, and 6, the plurality of connecting pipes 30 connect the plurality of second joint assemblies 20 to the plurality of passages 11 of the first joint assembly 10 in one-to-one correspondence, respectively. The first joint assembly 10 and the second joint assemblies 20 have joints 51 configured to abut hermetically against the ports of the oil sumps of the compressors CP1, CP2, and CP3, respectively, and connection members 52 configured to connect the first joint assembly 10 and the second joint assemblies 20 to the compressors CP2, CP1, and CP3, respectively. The first joint assembly 10 and the second joint assemblies 20 arc connected to the oil sumps of the compressors CP2, CP1, and CP3, respectively, and the plurality of passages 11 of the first joint assembly 10 are connected to the plurality of second joint assemblies 20 through the plurality of connecting pipes 30, respectively.

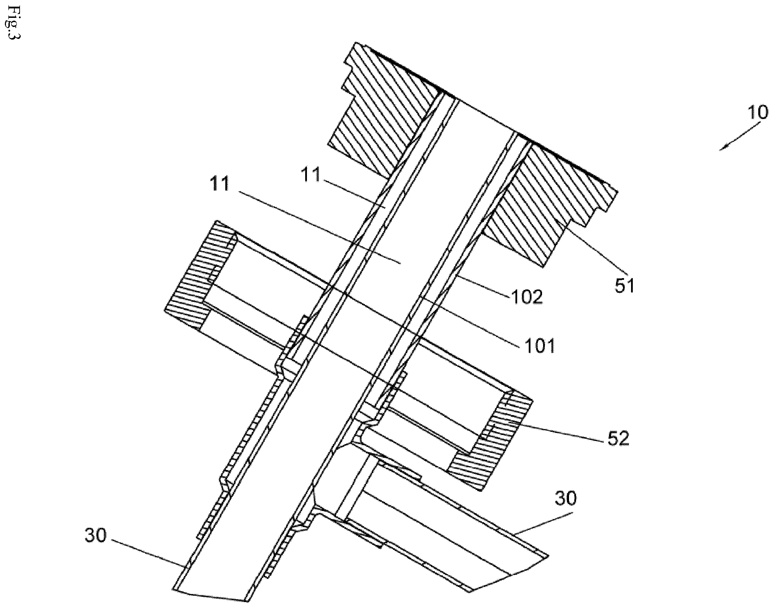

The refrigeration system 100 may include three, four, five or more compressors, and the number of the passages 11 of the first joint assembly 10 and the number of the second joint assemblies 20 are changed accordingly. For example, the oil distributing device 1 shown in FIG. 1 is an oil distributing device 1 configured for a refrigeration system 100 including three compressors, the first joint assembly 10 of the oil distributing device 1 shown in FIG. 3 is a first joint assembly 10 of the oil distributing device 1 configured for the refrigeration system 100 including the three compressors, and the first joint assembly 10 of the oil distributing device 1 shown in FIG. 6 is a first joint assembly 10 of an oil distributing device 1 configured for a refrigeration system 100 including four compressors.

Referring to FIG. 5, the at least three compressors include one variable-speed compressor and a plurality of fixed-speed compressors, and the first joint assembly 10 of the oil distributing device 1 is connected to a port of an oil sump of one of the plurality of fixed-speed compressors. The second joint assemblies 20 are connected to the variable-speed compressor and the others of the fixed-speed compressors, respectively. For example, as shown in FIG. 5, the at least three compressors CP1, CP2 and CP3 may include one variable-speed compressor CP1 and two fixed-speed compressors CP2 and CP3, which are connected in parallel. In this case, the first joint assembly 10 of the oil distributing device 1 is connected to a port of an oil sump of a first one CP2 of the fixed-speed compressors between the variable-speed compressor CP1 and a second one CP3 of the fixed-speed compressors, and the second joint assemblies 20 are connected to a port of an oil sump of the variable-speed compressor CP1 and a port of an oil sump of the second one CP3 of the fixed-speed compressors, respectively. The refrigeration system 100 may further include an oil level monitor disposed in the variable-speed compressor CP1. Alternatively, the oil level monitor is disposed in at least one of the compressors CP1, CP2 and CP3. For example, the oil level monitors are disposed in all the compressors CP1, CP2 and CP3 to monitor oil levels in the oil sumps of the compressors CP1, CP2 and CP3, respectively.

According to an embodiment of the present invention, as shown in FIG. 3, the first joint assembly 10 includes a first tubular member 101 and a second tubular member 102 surrounding the first tubular member 101, an annular space between the first tubular member 101 and the second tubular member 102 serves as a first one of the plurality of passages 11 of the first joint assembly 10, and an internal cavity of the first tubular member 101 serves as a second one of the plurality of passages 11 of the first joint assembly 10. The annular space between the first tubular member 101 and the second tubular member 102 is connected to a first one of the connecting pipes 30, and the first tubular member 101 is connected to a second one of the connecting pipes 30. The annular space has one end connected to the oil sump of the compressor CP2, and the other closed end as shown in FIG. 3. As shown in FIG. 3, for example, the annular space is in fluid communication with the first one of the plurality of connecting pipes 30 through a T joint disposed on the annular space, and the first tubular member 101 is connected directly to the second one of the plurality of connecting pipes 30.

In another embodiment, the first joint assembly 10 includes a plurality of tubular members 101, and an internal cavity of each of the plurality of tubular members 101 serves as one of the plurality of passages 11 of the first joint assembly 10.

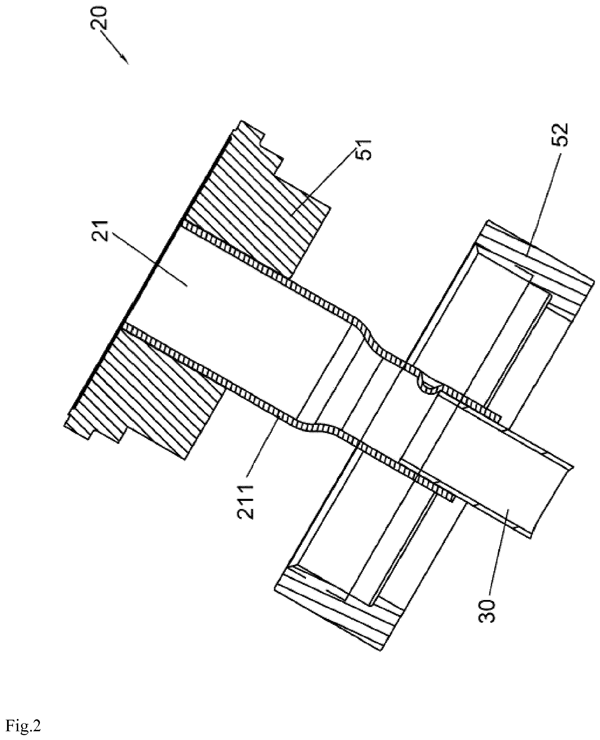

According to an embodiment of the present invention, referring to FIGS. 2 and 4, the second joint assembly 20 includes a tubular member 211 forming a passage 21 and connected to the connecting pipe 30, thereby achieving a fluid communication between the compressor CP1 or CP3 and the connecting pipes 30.

According to embodiments of the present invention, referring to FIG. 5, the at least three compressors CP1, CP2 and CP3 include at least one variable-speed compressor CP1 and a plurality of fixed-speed compressors CP2 and CP3, and the first joint assembly 10 is connected to a port of an oil sump of one of the plurality of fixed-speed compressors CP2 and CP3. According to embodiments of the present invention, referring to FIG. 5, the at least three compressors CP1, CP2 and CP3 include one variable-speed compressor CP1 and two fixed-speed compressors CP2 and CP3, which are connected in parallel, and the first joint assembly 10 is connected to a port of an oil sump of one of the two fixed-speed compressors CP2 and CP3.

According to another example of the present invention, as shown in FIG. 6, the first joint assembly 10 includes a plurality of conduits 111, and an internal cavity of each of the plurality of conduits 111 serves as one of the plurality of passages 11 of the first joint assembly 10. Each of the plurality of conduits 111 is connected to a corresponding one of the connecting pipes 30, thereby achieving a fluid communication between the compressor that the first joint assembly 10 is connected to and the connecting pipes 30.

In the embodiment shown in FIGS. 3 and 5, the refrigeration system 100 includes one variable-speed compressor CP1 and two fixed-speed compressors CP2 and CP3. The one variable-speed compressor CP1 is positioned closer to an inlet of the suction pipe 61 than the two fixed-speed compressors CP2 and CP3. In addition, an oil level monitor is mounted in the one variable-speed compressor CP1 to monitor a variation of the oil level in the oil sump of the one variable-speed compressor CP1.

In the case where the variable-speed compressor CP1 runs at a highest frequency while the three compressors CP1, CP2 and CP3 operate simultaneously, a balance among pressures in chambers of the three compressors CP1, CP2 and CP3 is achieved through a throttle valve, such as a throttle ring, disposed on the suction pipe 61, thereby reaching an oil level balance.

In the case where the variable-speed compressor CP1 runs at an intermediate or low frequency while the three compressors CP1, CP2 and CP3 operate simultaneously, the oil in the variable-speed compressor CP1 will be conveyed to the fixed-speed compressor CP2 connected directly to the variable-speed compressor CP1, through the connecting pipe 30 and the passage 11 formed by the annular space between the first tubular member 101 and the second tubular member 102 under the action of a differential pressure, i.e. a pressure in the oil sump of the variable-speed compressor CP1 that is greater than that in the oil sump of the fixed-speed compressor CP2. The oil obtained by the fixed-speed compressor CP2 can in turn enter the fixed-speed compressor CP3 through the passage 11 formed by the internal cavity of the first tubular member 101 of the first joint assembly 10 and the connecting pipe 30. Meanwhile, the oil level monitor monitors a variation of the oil level in the variable-speed compressor CP1 in real time. Once the oil level drops below a set safe oil level, a control system will stop the operating fixed-speed compressor CP2 to ensure a safe oil level in the variable-speed compressor CP1.

When the variable-speed compressor CP1 and the fixed-speed compressor CP2 operate, the operating fixed-speed compressor CP2 is supplemented with a superfluous oil from the stopped fixed-speed compressor CP3. Meanwhile, the oil level monitor monitors a variation of the oil level in the variable-speed compressor CP1, thereby ensuring that a sufficient amount of oil is retained in each of the two operating compressors CP1 and CP2 while they operate.

When the variable-speed compressor CP1 and the fixed-speed compressor CP3 operate, the variable-speed compressor CP1 and the fixed-speed compressor CP3 which are operate are supplemented with a superfluous oil from the stopped fixed-speed compressor CP2. Meanwhile, the oil level monitor monitors the variation of the oil level in the variable-speed compressor CP1, thereby ensuring that a sufficient amount of oil is retained in each of the two operating compressors CP1 and CP3 while they operate.

With the oil distributing device and the refrigeration system according to the embodiments of the present invention, referring to FIG. 5, the oil sump of one variable-speed compressor CP1 is separately connected to the oil sump of one fixed-speed compressors CP2, and the oil sumps of the two fixed-speed compressors CP2 and CP3 are connected to each other, thereby achieving a better oil balance control of the compressors.

Referring to FIGS. 5 and 6, the oil distributing device according to the embodiments of the present invention avoids a direct fluid connection among the plurality of passages 11, so that the oil flows directly between only two compressors.

The oil distributing device according to the embodiments of the present invention has a simplified structure and a good oil balance controlling effect, and is suitable for an engineering application.

## Claims

1. An oil distributing device (1) connectable among at least three compressors (CP1, CP2, CP3) and configured to distribute oil among the at least three compressors (CP1, CP2, CP3), the oil distributing device (1) comprising:
a first joint assembly (10) comprising a plurality of passages (11) fluidly isolated from each other;
a plurality of second joint assemblies (20); and
a plurality of connecting pipes (30) respectively connecting the plurality of second joint assemblies (20) to the plurality of passages (11) of the first joint assembly (10) in one-to-one correspondence, **characterized in that**
the first joint assembly (10) comprises a first tubular member (101) and a second tubular member (102) surrounding the first tubular member (101), an annular space between the first tubular member (101) and the second tubular member (102) serves as a first one of the plurality of passages (11) of the first joint assembly (10), and an internal cavity of the first tubular member serves as a second one of the plurality of passages (11) of the first joint assembly (10).

2. The oil distributing device of claim 1, wherein:
the annular space is in fluid communication with a first one of the plurality of connecting pipes (30) through a T joint, and the first tubular member is connected directly to a second one of the plurality of connecting pipes (30).

3. The oil distributing device of claim 1, wherein:
the first joint assembly (10) comprises a plurality of tubular members (101), and an internal cavity of each of the plurality of tubular members (101) serves as one of the plurality of passages (11) of the first joint assembly (10).

4. The oil distributing device of claim 1, wherein:
the at least three compressors (CP1, CP2, CP3) comprise at least one variable-speed compressor (CP1) and a plurality of fixed-speed compressors (CP2, CP3), and the first joint assembly (10) is connectable to a port of an oil sump of one of the plurality of fixed-speed compressors (CP2, CP3).

5. The oil distributing device of claim 1, wherein:
the at least three compressors (CP1, CP2, CP3) comprise one variable-speed compressor (CP1) and two fixed-speed compressors (CP2, CP3), which are connected in parallel, and the first joint assembly (10) is connectable to a port of an oil sump of one of the two fixed-speed compressors (CP2, CP3).

6. A refrigeration system comprising:
at least three compressors (CP1, CP2, CP3) each having an oil sump configured to store oil;
a suction pipe (61) configured to supply gas and oil to each of the at least three compressors (CP1, CP2, CP3);
a discharge pipe (62) configured to discharge the gas and the oil from the at least three compressors (CP1, CP2, CP3); and
the oil distributing device (1) of any one of claims 1 to 3, wherein the first joint assembly (10) and the plurality of second joint assemblies (20) are connected to the oil sumps of the compressors (CP1, CP2, CP3) in one-to-one correspondence, respectively.

7. The refrigeration system of claim 6, wherein:
the at least three compressors (CP1, CP2, CP3) comprise at least one variable-speed compressor (CP1) and a plurality of fixed-speed compressors (CP2, CP3), and the first joint assembly (10) is connected to a port of an oil sump of one of the plurality of fixed-speed compressors (CP2, CP3).

8. The refrigeration system of claim 6, wherein:
the at least three compressors (CP1, CP2, CP3) comprise one variable-speed compressor (CP1) and two fixed-speed compressors (CP2, CP3), which are connected in parallel, and the first joint assembly (10) is connected to a port of an oil sump of one of the two fixed-speed compressors (CP2, CP3).

9. The refrigeration system of claim 7 or 8, further comprising:
an oil level monitor disposed in the variable-speed compressor (CP1).

10. The refrigeration system of claim 6, further comprising:
a throttle ring disposed on the suction pipe (61).

11. The refrigeration system of claim 8, wherein:
the one variable-speed compressor (CP1) is disposed closer to an inlet of the suction pipe (61) than the two fixed-speed compressors (CP2, CP3).

## Patentansprüche

1. Ölverteilungsvorrichtung (1), die mit mindestens drei Kompressoren (CP1, CP2, CP3) verbindbar ist und so ausgebildet ist, dass sie Öl unter den mindestens drei Kompressoren (CP1, CP2, CP3) verteilt, wobei die Ölverteilungsvorrichtung (1) umfasst:
eine erste Verbindungsbaugruppe (10), die eine Vielzahl von strömungstechnisch voneinander isolierten Durchlässen (11) aufweist;
eine Vielzahl von zweiten Verbindungsanordnungen (20); und
eine Vielzahl von Verbindungsleitungen (30), die jeweils die Vielzahl von zweiten Verbindungsanordnungen (20) mit der Vielzahl von Durchlässen (11) der ersten Verbindungsanordnung (10) in 1-zu-1-Entsprechung verbinden, **dadurch gekennzeichnet, dass**
die erste Verbindungsbaugruppe (10) ein erstes rohrförmiges Element (101) und ein zweites rohrförmiges Element (102) aufweist, das das erste rohrförmige Element (101) umgibt, ein ringförmiger Raum zwischen dem ersten rohrförmigen Element (101) und dem zweiten rohrförmigen Element (102) als ein erster der Vielzahl von Durchgängen (11) der ersten Verbindungsbaugruppe (10) dient und ein Innenhohlraum des ersten rohrförmigen Elements als ein zweiter der Vielzahl von Durchgängen (11) der ersten Verbindungsbaugruppe (10) dient.

2. Ölverteilungsvorrichtung nach Anspruch 1, wobei:
der ringförmige Raum über eine T-Verbindung in Fluidverbindung mit einer ersten der mehreren Verbindungsleitungen (30) steht und das erste rohrförmige Element direkt mit einem zweiten der mehreren Verbindungsleitungen (30) verbunden ist.

3. Ölverbindungsvorrichtung nach Anspruch 1, wobei:
die erste Verbindungsbaugruppe (10) eine Vielzahl von rohrförmigen Elementen (101) umfasst, und ein innerer Hohlraum jedes der Vielzahl von rohrförmigen Elementen (101) als einer der Vielzahl von Durchgängen (11) der ersten Verbindungsbaugruppe (10) dient.

4. Ölverteilungsvorrichtung nach Anspruch 1, worin:
die mindestens drei Kompressoren (CP1, CP2, CP3) mindestens einen Kompressor mit variabler Drehzahl (CP1) und eine Mehrzahl von Kompressoren mit fester Drehzahl (CP2, CP3) aufweisen, und die erste Verbindungsbaugruppe (10) mit einem Anschluss eines Ölsumpfes eines der Mehrzahl von Kompressoren mit fester Drehzahl (CP2, CP3) verbindbar ist.

5. Ölverteilungsvorrichtung nach Anspruch 1, worin:
die mindestens drei Kompressoren (CP1, CP2, CP3) einen Kompressor mit variabler Drehzahl (CP!) und zwei Kompressoren mit fester Drehzahl (CP2, CP3) aufweisen, die parallel geschaltet werden können, und die erste Verbindungsbaugruppe (10) mit einem Anschluss eines Ölsumpfes eines der beiden Kompressoren mit fester Drehzahl (CP2, CP3) verbindbar ist.

6. Ein Kühlsystem, das Folgendes aufweist:
mindestens drei Kompressoren (CP1, CP2, CP3), von denen jeder einen Ölsumpf aufweist, der zur Lagerung von Öl ausgebildet ist;
eine Ansaugleitung (61), die so ausgebildet ist, dass sie Gas und Öl zu jedem der mindestens drei Kompressoren (CP1, CP2, CP3) liefert;
eine Auslassleitung (62), die so ausgebildet ist, dass sie das Gas und das Öl aus den mindestens drei Kompressoren (CP1, CP2, CP3) auslässt; und
die Ölverteilungsvorrichtung nach einem der Ansprüche 1 bis 3, wobei die erste Verbindungsbaugruppe (10) und die mehreren zweiten Verbindungsbaugruppen (20) mit den Ölsumpfen der Kompressoren (CP1, CP2, CP3) jeweils in 1-zu-1-Entsprechung verbunden sind.

7. Kühlsystem nach Anspruch 6, wobei:
die mindestens drei Kompressoren (CP1, CP2, CP3) mindestens einen Kompressor (CP1) mit variabler Drehzahl und einer Mehrzahl von Kompressoren mit fester Drehzahl (CP2, CP3) aufweisen, und die erste Verbindungsbaugruppe (10) mit einem Anschluss eines Ölsumpfes eines der Mehrzahl von Kompressoren mit fester Drehzahl (CP2, CP3) verbunden ist.

8. Kühlsystem nach Anspruch 6, wobei:
die mindestens drei Kompressoren (CP1, CP2, CP3) einen Kompressor (CP1) mit variabler Drehzahl und zwei Kompressoren mit fester Drehzahl (CP2, CP3) aufweisen, die parallel geschaltet sind, und die erste Verbindungsbaugruppe (10) mit einem Anschluss eines Ölsumpfes eines der beiden Verdichter mit fester Drehzahl (CP2, CP3) verbunden ist.

9. Kühlsystem nach Anspruch 7 oder 8, das ferner aufweist:
einen Ölstandswächter, der in dem Kompressor (CP1) mit variabler Drehzahl angeordnet ist.

10. Kühlsystem nach Anspruch 6, das ferner aufweist:
einen Drosselring, der an der Saugleitung (61) angeordnet ist.

11. Kühlsystem nach Anspruch 8, wobei:
der eine Kompressor (CP1) mit variabler Drehzahl näher an einem Einlass des Saugrohrs (61) angeordnet ist, als die beiden Kompressoren (CP2, CP3) mit fester Drehzahl.

## Revendications

1. Dispositif de distribution d'huile (1) pouvant être raccordé parmi au moins trois compresseurs (CP1, CP2, CP3) et configuré pour distribuer de l'huile parmi les au moins trois compresseurs (CP1, CP2, CP3), le dispositif de distribution d'huile (1) comprenant :
un premier ensemble de charnière (10) comprenant une pluralité de passages (11) isolés de manière fluidique l'un de l'autre ;
une pluralité de deuxièmes ensembles de charnières (20) ; et
une pluralité de tuyaux de raccordement (30) raccordant respectivement la pluralité de deuxièmes ensembles de charnières (20) à la pluralité de passages (11) du premier ensemble de charnière (10) dans une correspondance un à un, **caractérisé en ce que**
le premier ensemble de charnière (10) comprend un premier membre tubulaire (101) et un deuxième membre tubulaire (102) entourant le premier membre tubulaire (101), un espace annulaire entre le premier membre tubulaire (101) et le deuxième membre tubulaire (102) sert en tant qu'un premier de la pluralité de passages (11) du premier ensemble de charnière (10), et une cavité intérieure du premier membre tubulaire sert en tant qu'un deuxième de la pluralité de passages (11) du premier ensemble de charnière (10).

2. Dispositif de distribution d'huile selon la revendication 1, dans lequel :
l'espace annulaire est en communication fluidique avec un premier de la pluralité de tubes de raccordement (30) par une charnière en T, et le premier membre tubulaire est raccordé directement à un deuxième de la pluralité de tubes de raccordement (30).

3. Dispositif de distribution d'huile selon la revendication 1, dans lequel :
le premier ensemble de charnière (10) comprend une pluralité de membres tubulaires (101), et une cavité intérieure de chacun de la pluralité de membres tubulaires (101) sert en tant qu'un de la pluralité de passages (11) du premier ensemble de charnière (10).

4. Dispositif de distribution d'huile selon la revendication 1, dans lequel :
les au moins trois compresseurs (CP1, CP2, CP3) comprennent au moins un compresseur à vitesse variable (CP1) et une pluralité de compresseurs à vitesse fixe (CP2, CP3), et le premier ensemble de charnière (10) peut être raccordé à un port d'un carter d'huile de l'un de la pluralité de compresseurs à vitesse fixe (CP2, CP3).

5. Dispositif de distribution d'huile selon la revendication 1, dans lequel :
les au moins trois compresseurs (CP1, CP2, CP3) comprennent un compresseur à vitesse variable (CP1) et deux compresseurs à vitesse fixe (CP2, CP3) qui sont raccordés en parallèle, et le premier ensemble de charnière (10) peut être raccordé à un port d'un carter d'huile de l'un des deux compresseurs à vitesse fixe (CP2, CP3).

6. Système de réfrigération comprenant :
au moins trois compresseurs (CP1, CP2, CP3) ayant chacun un carter d'huile configuré pour stocker de l'huile ;
un tuyau d'aspiration (61) configuré pour fournir du gaz et de l'huile à chacun des au moins trois compresseurs (CP1, CP2, CP3) ;
un tuyau de décharge (62) configuré pour décharger le gaz et l'huile des au moins trois compresseurs (CP1, CP2, CP3) ; et
le dispositif de distribution d'huile (1) selon l'une quelconque des revendications 1 à 3, dans lequel le premier ensemble de charnière (10) et la pluralité de deuxièmes ensembles de charnière (20) sont raccordés aux carters d'huile des compresseurs (CP1, CP2, CP3) dans une correspondance un à un, respectivement.

7. Système de réfrigération selon la revendication 6, dans lequel :
les au moins trois compresseurs (CP1, CP2, CP3) comprennent au moins un compresseur à vitesse variable (CP1) et une pluralité de compresseurs à vitesse fixe (CP2, CP3), et le premier ensemble de charnière (10) est raccordé à un port d'un carter d'huile de l'un de la pluralité de compresseurs à vitesse fixe (CP2, CP3).

8. Système de réfrigération selon la revendication 6, dans lequel :
les au moins trois compresseurs (CP1, CP2, CP3) comprennent un compresseur à vitesse variable (CP1) et deux compresseurs à vitesse fixe (CP2, CP3) qui sont raccordés en parallèle, et le premier ensemble de charnière (10) est raccordé à un port d'un carter d'huile de l'un des deux compresseurs à vitesse fixe (CP2, CP3).

9. Système de réfrigération selon la revendication 7 ou 8, comprenant en outre :
un dispositif de contrôle de niveau d'huile disposé dans le compresseur à vitesse variable (CP1).

10. Système de réfrigération selon la revendication 6, comprenant en outre :
une bague réductrice disposée sur le tuyau d'aspiration (61) .

11. Système de réfrigération selon la revendication 8, dans lequel :
l'un compresseur à vitesse variable (CP1) est disposé plus près d'une entrée du tuyau d'aspiration (61) que les deux compresseurs à vitesse fixe (CP2, CP3).
